(19) Europäisches Patentamt
European Patent Office
Office européen des brevets

(11) Veröffentlichungsnummer: **0 306 756 B1**

(12) **EUROPÄISCHE PATENTSCHRIFT**

(45) Veröffentlichungstag der Patentschrift: **03.02.93**

(51) Int. Cl.[5]: **C08F 220/38**, C08F 230/08, G02B 1/04

(21) Anmeldenummer: **88113589.1**

(22) Anmeldetag: **22.08.88**

# (54) Kontaktoptische Gegenstände.

(30) Priorität: **03.09.87 DE 3729457**

(43) Veröffentlichungstag der Anmeldung: **15.03.89 Patentblatt 89/11**

(45) Bekanntmachung des Hinweises auf die Patenterteilung: **03.02.93 Patentblatt 93/05**

(84) Benannte Vertragsstaaten: **AT BE CH DE ES FR GB IT LI NL SE**

(56) Entgegenhaltungen:
**EP-A- 0 190 993**
**EP-A- 0 231 572**
**EP-A- 0 253 515**

(73) Patentinhaber: **Geyer, Otto-Christian, Dr.**
**Ulmenweg 9**
**W-6333 Braunfels(DE)**

(72) Erfinder: **Ostarek, Ralph, Dr.**
**Oskar-Erbslöh-Strasse 32**
**W-5653 Leichlingen 1(DE)**
Erfinder: **Wingler, Frank, Dr.**
**Walter-Flex-Strasse 17**
**W-5090 Leverkusen 1(DE)**
Erfinder: **Geyer, Otto-Christian, Dr.**
**Bahnhofstrasse 12**
**W-6330 Wetzlar(DE)**

(74) Vertreter: **Bunke, Holger, Dr.rer.nat. Dipl.-Chem. et al**
**Patentanwälte Prinz, Leiser, Bunke & Partner**
**Manzingerweg 7**
**W-8000 München 60(DE)**

**EP 0 306 756 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft kontaktoptische Gegenstände aus gegebenenfalls vernetzten Copolymerisaten auf Basis von Siloxanyl- und Fluoro-(Meth)acrylaten.

Kontaktoptische Gegenstände im Rahmen der vorliegenden Erfindung sind bevorzugt Kontaktlinsen und Skleralschalen.

Die auf dem Markt befindlichen Kontaktlinsen lassen sich in harte und weiche Materialien unterteilen. Die weichen Linsen, die eng am Auge sitzen, müssen über eine hohe Sauerstoffdurchlässigkeit verfügen, da die Sauerstoffversorgung in besonderem Maße über die Atmosphäre stattfindet. Dieses wird durch einen sehr hohen Wasseranteil (Hydrogel-Linsen) oder den Einsatz von hochpermeablen Silikonen, die oberflächlich hydrophiliert sind, erreicht.

Harte Kontaktlinsen-Materialien bieten den Vorteil, daß außer der Permeation durch die Linse auch durch den Austausch der Tränenflüssigkeit das Auge mit Sauerstoff versorgt werden kann, da die Linsen auf dem Auge schwimmen. Voraussetzung hierfür ist eine ausreichende Hydrophilie des Materials, die eine Benetzung der Linse durch die Tränenflüssigkeit ermöglicht.

Ein weiterer Vorteil der harten Linsen ist ihre äußerst problemlose Pflege. Durch den geringen Wasseranteil ist die Gefahr von Trübung durch Protein- und Lipoidablagerungen und die bakterielle Verunreinigung stark herabgesetzt (O.C. Geyer, Kontakt-Linsen - aber richtig, Schnetztor Verlag, Konstanz, 1979).

Harte Kontaktlinsen-Materialien, aus vernetzten Copolymerisaten auf Basis von Siloxanyl-Methacrylsäureestern und/oder Fluor-Methacrylaten sind bekannt (US 3.808.178; WO 86/04342). Gegenüber Polymethylmethacrylat zeichnen sich diese Materialien durch eine deutlich höhere Sauerstoffdurchlässigkeit aus.

Nachteile der oben beschriebenen Materialien sind allerdings die unbefriedigenden Oberflächeneigenschaften. Aufgrund der hohen Silikon- bzw. Fluoranteile kommt es zu schlechten Oberflächenbenetzbarkeiten, wodurch der Tragekomfort der Linse herabgesetzt wird.

Eine nachträgliche Hydrophilierung der Oberfläche, beispielsweise durch Coronaentladung oder Plasmabehandlung, verbessert kurzfristig die Benetzbarkeit, doch nach längerem Tragen verliert die Linse ihre gute Verträglichkeit, da die sehr dünne hydrophile Schicht durch mechanische und enzymatische Belastung zerstört wird.

Ein weiterer Nachteil der harten Materialien auf Basis von Siloxanyl-Methacrylaten besteht in der mangelnden Langzeitstabilität. Unter dem Einfluß von Licht und enzymatischem Abbau verwittern die Oberflächen und es kommt zu Mikrorissen, die die optischen Eigenschaften stark beeinträchtigen.

Um die Hydrophilie der Materialien zu verbessern, können hydrophile Monomere als Comonomere eingesetzt werden [DE-A 3 329 722; Polym. Technology Corp. (30.09.82)]. Diese weisen jedoch eine relativ hohe Wasseraufnahme auf, womit die Gefahr von Lipoidablagerungen steigt. Außerdem erweichen die Polymerisate und sind damit schlechter verarbeitbar und verfügen über ungenügende Radienstabilität.

Es wurden kontaktoptische Gegenstände aus gegebenenfalls vernetzten Copolymerisaten gefunden, die dadurch gekennzeichnet sind, daß sie als Comonomere die Komponenten

A) 5 bis 40 Gew.-% eines 2-N-(Alkyl-perfluoralkylsulfonamido)-alkyl(meth)acrylats der Formel

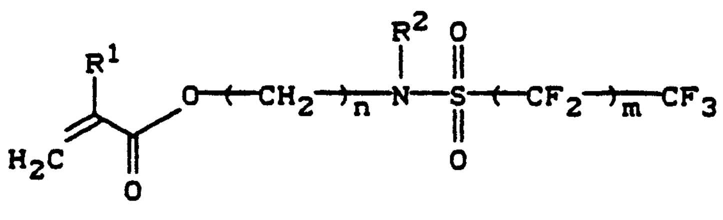

(I),

in der

- $R^1$ H, $CH_3$,
- $R^2$ H, Niederalkyl, Cycloalkyl, Aryl,
- n eine Zahl von 1 bis 6,
- m eine Zahl von 0 bis 11

bedeuten,

B) 5 bis 60 Gew.-% eines Siloxanyl-(Meth)acrylsäureesters oder eines Gemisches verschiedener Siloxanyl-(Meth)acrylsäureester,

C) gegebenenfalls bis zu 65 Gew.-% eines nicht hydrophilen Vinylmonomeren,

D) gegebenenfalls bis zu 20 Gew.-% eines hydrophilen Vinylmonomeren und

E) gegebenenfalls bis zu 10 Gew.-% eines nicht unter B) fallenden bis- oder polyfunktionellen Vinylmonomeren im Polymeren enthalten, wobei die Summe der Gewichtsprozente A) bis E) 100 beträgt.

Überraschenderweise verfügen die erfindungsgemäßen kontaktoptischen Gegenstände über eine exzellente Sauerstoffdurchlässigkeit, verbunden mit guter Benetzbarkeit, geringer Wasseraufnahme und hoher Langzeitstabilität.

Monomere der Komponente A) sind im allgemeinen 2-(N-Alkyl-Perfluoroalkylsulfonamido)alkyl(meth)-acrylate der Formel I.

Niederalkyl bedeutet verzweigte und unverzweigte Kohlenwasserstoff-Reste mit 1 bis 6 Kohlenstoffatomen. Als Beispiele seien genannt Methyl, Ethyl, n-Propyl, iso-Propyl, n-Butyl, iso-Butyl, t-Butyl, Pentyl, iso-Pentyl, Neopentyl, n-Hexyl und iso-Hexyl. Bevorzugt seien Methyl, Ethyl und iso-Propyl und besonders bevorzugt Methyl aufgeführt.

Cycloalkyl bedeutet cyclische Kohlenwasserstoffreste mit 5 bis 9 Kohlenstoffatomen. Beispielsweise seien genannt Cyclopentyl, Cyclohexyl, Cycloheptyl und Cyclooctyl. Bevorzugt werden Cyclopentyl und Cyclohexyl, besonders bevorzugt Cyclohexyl.

Aryl bedeutet einen aromatischen Kohlenwasserstoffrest mit 6 bis 12 Kohlenstoffatomen. Beispielsweise seien Phenyl, Naphthyl, Biphenylyl und Benzyl genannt. Bevorzugte Arylreste sind Phenyl und Benzyl.

Die 2-(N-Alkyl-Perfluoroalkylsulfonamido)alkyl(meth)acrylate sind bekannt und können aus den entsprechenden Perfluoralkylsulfonamiden durch Umsetzung mit entsprechenden Halohydrinen und nachfolgender Veresterung mit (Meth)acrylsäure hergestellt werden (US 2.803.615). Bevorzugte 2-(N-Alkyl-Perfluoroalkylsulfonamido)alkyl(meth)acrylate sind 2-(N-Methyl-Perfluorobutylsulfonamido)ethylmethacrylat und 2-(N-Methyl-Perfluorooctylsulfonamido)ethylmethacrylat. Besonders bevorzugt ist 2-(N-Methyl-Perfluorobutylsulfonamido)ethylmethacrylat ($C_4FM$).

Die erfindungsgemäßen kontaktoptischen Gegenstände können im allgemeinen 5 bis 40 Gew.-%, bevorzugt 10 bis 40 Gew.-% und besonders bevorzugt 10 bis 30 Gew.-% des Fluormonomeren im Polymeren enthalten.

Monomere der Komponente B) sind im allgemeinen Siloxanyl-(Meth)acrylate wie beispielsweise:

1. Verbindungen der Formel

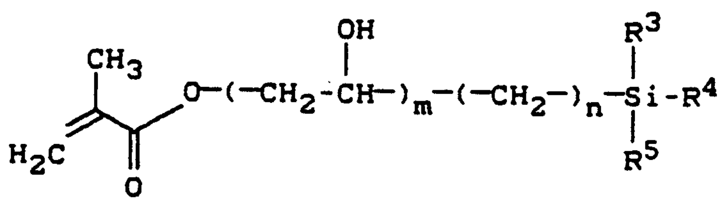 (II),

in der

m für 0 oder 1 steht,

n für eine Zahl von 1 bis 3 steht,

$R^3$, $R^4$ und $R^5$ gleich oder verschieden sind und für Alkoxy, Niederalkyl, Cycloalkyl, Aryl, Trimethylsiloxy, Polysiloxy oder den Rest

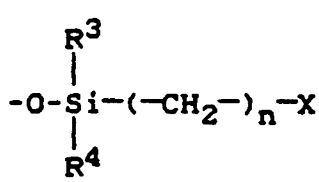

steht, in dem

n, $R^3$, $R^4$ die oben genannten Bedeutungen haben, und

X für Hydroxy, Acetoxy, Alkoxy, Amino, Mercapto, Glycidoxy oder Carboxy steht.

2. Verbindungen der Formel

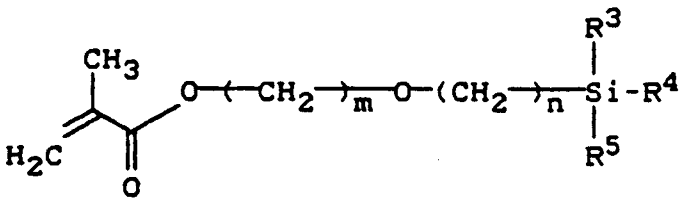 (III),

in der

| | |
|---|---|
| m und n | unabhängig für eine Zahl von 1 bis 3 steht, |
| $R^3$, $R^4$ und $R^5$ | gleich oder verschieden sind und für Alkoxy, Niederalkyl, Cycloalkyl, Aryl, Trimethylsiloxy, Polysiloxy oder den Rest |

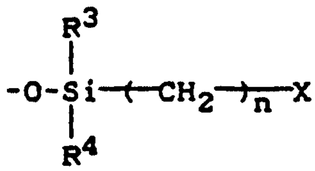

stehen, in dem

| | |
|---|---|
| n, $R^3$, $R^4$ | die oben genannten Bedeutungen haben, und |
| X | für Hydroxy, Acetoxy, Alkoxy, Amino, Mercapto, Glycidoxy oder Carboxy steht. |

3. Verbindungen der Formel

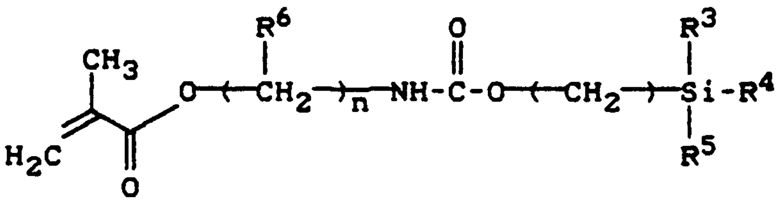 (IV),

in der

| | |
|---|---|
| n | für eine Zahl von 1 bis 3 steht, |
| $R^3$, $R^4$ und $R^5$ | gleich oder verschieden sind und für Alkoxy, Niederalkyl, Cycloalkyl, Aryl, Trimethylsiloxy, Polysiloxy oder den Rest |

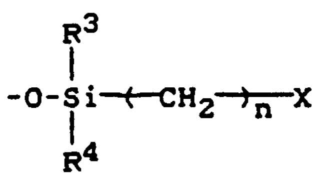

stehen, in dem

| | |
|---|---|
| n, $R^3$, $R^4$ | die oben genannten Bedeutungen haben, und |
| X | für Hydroxy, Acetoxy, Alkoxy, Amino, Mercapto, Glycidoxy oder Carboxy steht, und |
| $R^6$ | für Niederalkyl oder Cycloalkyl steht. |

4. Verbindungen der Formel

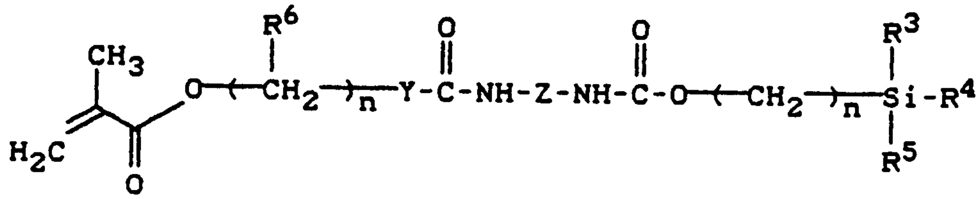

(V),

in der

| | |
|---|---|
| n | für eine Zahl von 1 bis 3 steht, |
| $R^3$, $R^4$ und $R^5$ | gleich oder verschieden sind und für Alkoxy, Niederalkyl, Cycloalkyl, Aryl, Trimethylsiloxy, Polysiloxy oder den Rest |

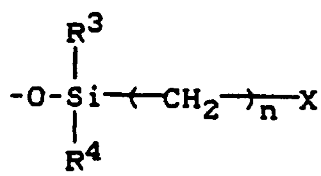

stehen, in dem

| | |
|---|---|
| n, $R^3$, $R^4$ | die oben genannten Bedeutungen haben, und |
| X | für Hydroxy, Acetoxy, Alkoxy, Amino, Mercapto, Glycidoxy oder Carboxy steht, |
| $R^6$ | für H, Niederalkyl oder Cycloalkyl steht, |
| Y | für O, S oder den Rest |

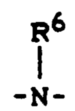

steht, in dem

| | |
|---|---|
| $R^6$ | die oben genannte Bedeutung hat, und |
| Z | für ein divalentes $C_2$ bis $C_{24}$-Alkylen, $C_5$ bis $C_9$-Cycloalkylen, $C_6$ bis $C_{12}$-Arylen oder einen divalenten Rest mit 7 bis 24 Kohlenstoffatomen aus Alkylen, Cycloalkylen und/oder Arylengruppen steht. |

Niederalkyl bedeutet im allgemeinen verzweigte und unverzweigte Kohlenwasserstoff-Reste mit 1 bis 6 Kohlenstoffatomen. Als Beispiele seien genannt Methyl, Ethyl, n-Propyl, iso-Propyl, n-Butyl, iso-Butyl, t-Butyl, Pentyl, iso-Pentyl, Neopentyl, n-Hexyl und iso-Hexyl, Bevorzugt seien Methyl, Ethyl und iso-Propyl und besonders bevorzugt Methyl aufgeführt.

Als Cycloalkyl seien im allgemeinen cyclische Kohlenwasserstoffreste mit 5 bis 9 Kohlenstoffatomen genannt. Beispielsweise seien genannt Cyclopentyl, Cyclohexyl, Cycloheptyl und Cyclooctyl, Bevorzugt werden Cyclopentyl und Cyclohexyl, besonders bevorzugt Cyclohexyl.

Alkoxy bedeutet im allgemeinen einen über Sauerstoff gebundenen geradkettigen oder verzweigten Kohlenwasserstoffrest mit 1 bis etwa 8 Kohlenstoffatomen. Bevorzugt wird Niederalkoxy mit 1 bis etwa 6 Kohlenstoffatomen. Beispielsweise seien genannt Methoxy, Ethoxy, Propoxy, iso-Propoxy, Butoxy, iso-Butoxy, tert.-Butoxy, Pentoxy, iso-Pentoxy, Hexoxy und iso-Hexoxy, Besonders bevorzugt werden Methoxy und Ethoxy.

Aryl bedeutet im allgemeinen einen aromatischen Kohlenwasserstoffrest mit 6 bis 12 Kohlenstoffatomen. Beispielsweise seien Phenyl, Naphthyl, Biphenylyl und Benzyl genannt. Bevorzugte Arylreste sind Phenyl und Benzyl.

Divalentes Alkylen (Z) bedeutet im allgemeinen eine zweibindige unverzweigte oder verzweigte Kohlenwassetstoffkette mit 2 bis 24 Kohlenstoffatomen. Bevorzugt werden Alkylen-Reste mit 6 bis 9 Kohlenstoffatomen. Beispielsweise seien genannt Methylen, Ethylen, Trimethylen, Tetramethylen, Pentamethylen, 2,2-Dimethyltrimethylen, Hexamethylen und 2,2,4-Trimethylhexamethylen. Besonders bevorzugt sind Hexamethylen und 2,2,4-Trimethylhexamethylen.

Divalentes Cycloalkylen (Z) bedeutet im allgemeinen einen zweibindigen cyclischen Kohlenwasserstoffrest mit 5 bis 9 Kohlenstoffatomen.

Beispielsweise seien genannt Cyclopentylen, Cyclohexylen, Cycloheptylen und Cyclooctylen. Bevorzugt werden Cyclopentylen und Cyclohexylen. Besonders bevorzugt wird Cyclohexylen.

Divalentes Arylen (Z) bedeutet im allgemeinen einen zweibindigen aromatischen Kohlenwasserstoffrest mit 6 bis 12 Kohlenstoffatomen. Bevorzugt werden Phenylen-, Naphthylen- und Biphenylen-Rest. Besonders bevorzugt ist der Phenylen-Rest.

Divalente Reste mit 7 bis 24 Kohlenstoffatomen aus Alkylen, Cycloalkylen und/oder Arylengruppen sind beispielsweise Methylen-di-p-phenylen und 2,2-Propylen-di-p-phenylen.

Polysiloxyl bedeutet im allgemeinen geradkettige oder verzweigte, bevorzugt verzweigte, Polysiloxy-Reste der allgemeinen Formel

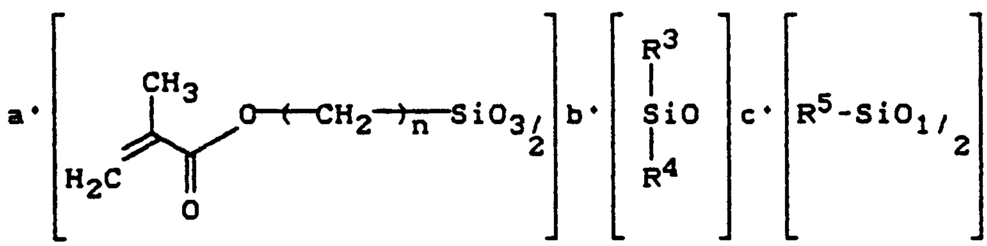

(VI),

in der

| | |
|---|---|
| n | für eine Zahl von 1 bis 3 steht, |
| $R^3$, $R^4$ und $R^5$ | gleich oder verschieden sind und für Alkoxy, Niederalkyl, Cycloalkyl, Aryl, Trimethylsiloxy oder den Rest |

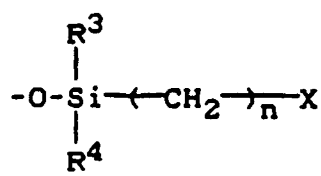

| | |
|---|---|
| | stehen, in dem |
| n, $R^3$, $R^4$ | die oben genannten Bedeutungen haben, und |
| X | für Hydroxy, Acetoxy, Alkoxy, Amino, Mercapto, Glycidoxy oder Carboxy steht, |

und die Faktoren a, b, c folgendermaßen bestimmt sind:

$a + b + c = 1.$
$0 \leqq a \leqq 0.8$; $0 \leqq b \leqq 0.8$ und $0 \leqq c \leqq 0.8$.

Siloxanyl-(Meth)acrylsäureester der Formel II können zum Beispiel sein: γ-Methacryloxypropyltrimethoxysilan (MEMO):

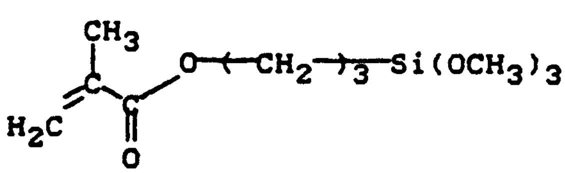

sowie dessen Derivate, wie beispielsweise: γ-Methacryloxypropyl-tris-(trimethylsiloxy)silan (TRIS):

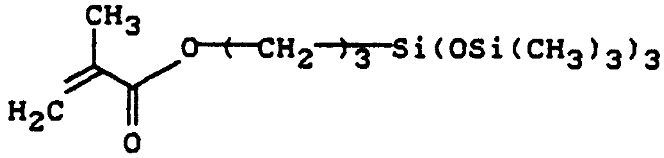

1,3-Bis(γ-methacryloxypropyl)-1,1,3,3-tetra(trimethylsiloxy)-disiloxan (TETRA):

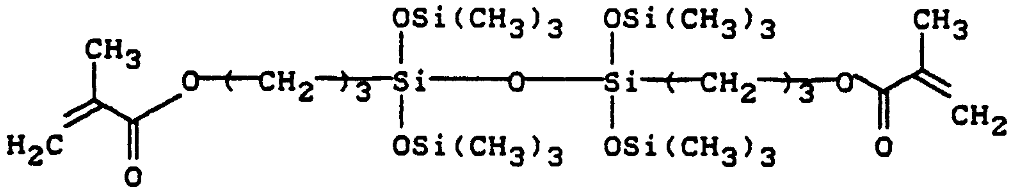

γ-Methacryloxypropyl-tris-(3-acetoxypropyldimethylsiloxy)silan (ATRIS):

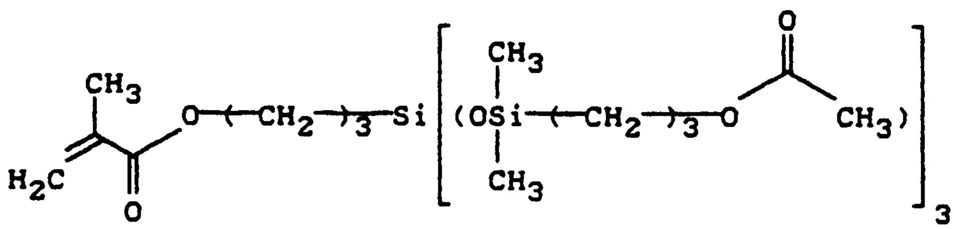

sowie γ-Methacryloxypropyl-bis-(trimethylsiloxy)-(3-acetoxypropyldimethylsiloxy)silan.
γ-Methacryloxypropyl-bis-(3-acetoxypropyldimethylsiloxy)-trimethylsiloxy)-silan.
γ-Methacryloxypropyl-tris-(3-hydroxypropyldimethylsiloxy)silan (HTRIS),
γ-Methacryloxypropyl-bis-(3-hydroxypropyldimethylsiloxy)-(trimethylsiloxy)silan und
γ-Methacryloxypropyl-bis-(trimethylsiloxy)-(3-hydroxypropyldimethylsiloxy)silan.

Die Verbindungen sind aus γ-Methacryloxypropyltrimethoxysilan und den entsprechenden funktionalisierten Chlor- bzw. Acetoxysilanen durch Hydrolyse herstellbar (DE-A 3.244.877; DE-A 3.309.631).

Weitere bekannte Siloxanyl-Methacrylate der Formel II sind beispielsweise:
Hydrolyseprodukte der Reaktion von δ-Methacryloxypropyltrimethoxysilan mit Dichlorodimethylsilan und Chlorotrimethylsilan (DE-A 3.329.722),
γ-Methacryloxypropylpentamethyldisiloxan (US 3.808.178) und
γ-Methacryloxypropyldimethyl(nonamethyltetrasiloxanyl)silan (US 4.303.772).

Siloxanyl-Methacrylate der Formel III sind beispielsweise Umsetzungsprodukte von β-Allyloxyethylmethacrylat mit SiH-Gruppen-haltigen Polysiloxanen (EP-A 130.731).

Siloxanyl-Methacrylate der Formel IV können durch Umsetzung von Isocyanatoethylmethacrylat mit Hydroxy- oder Aminoalkyl-terminierten Polysiloxanen hergestellt werden (EP-A 127.321; Yu X., Nagarajan H.R. J. Appl.Pol.Sci. 30, 2115 (1985).

Für Verbindungen der Formel V seien beispielsweise Siliconmethacrylat-Makromere genannt, die durch Umsetzung von Hydroxyalkyl-terminierten Polysiloxanen wie z.B. Polydimethylsiloxan-triol mit 1-Isocyanatomethyl-5-isocyanato-1,3,3-trimethylcyclohexan und β-Hydroxyethylmethacrylat hergestellt werden können. Der Methacryl-Rest ist bei den Verbindungen der Formel V mit dem Polysiloxan über Urethan, Thiourethan, Harnstoff oder Amidfunktionen verknüpft (Cameron E.G., Chisholm M.S. Polymer 1985, 26(3), 437; US 4.136.250; EP-A 109.355).

Bevorzugt verwendete Siloxanyl-Methacrylate sind:
γ-Methacryloxypropyltrimethoxysilan (MEMO),
γ-Methacryloxypropyl-tris-(trimethylsiloxy)silan (TRIS),
1,3-Bis(γ-methacryloxypropyl)-1,1,3,3-tetra(trimethylsiloxy)disiloxan (TETRA),

γ-Methacryloxypropyl-tris-(3-acetoxypropyldimethylsiloxy)silan (ATRIS),
γ-Methacryloxypropyl-tris-(3-hydroxypropyldimethylsiloxy)silan (HTRIS)
und Mischungen hieraus.
Besonders bevorzugt sind Mischungen aus TRIS, ATRIS, HTRIS und C4FM.

Die erfindungsgemäß kontaktoptischen Gegenstände enthalten im allgemeinen 5 bis 60 Gew.-% Siloxanyl-Methacrylat. Bevorzugt enthalten sie 10 bis 55 Gew.-%, und besonders bevorzugt 20 bis 40 Gew.-% der Monomeren im Polymeren.

Die erfindungsgemäß kontaktoptischen Gegenstände können gegebenenfalls als Komponente C) nicht hydrophile Vinylmonomeren enthalten. Bevorzugte Vinylmonomere sind beispielsweise (Meth)acrylsäure-Derivate wie $C_1$ bis $C_{12}$-Alkyl- bzw. Cycloalkylester der (Meth)acrylsäure.

Beispielsweise seien genannt:
Methyl(meth)acrylat, Ethyl(meth)acrylat, Propyl(meth)acrylat, Butyl(meth)acrylat, 2-Ethylhexyl(meth)acrylat, (Iso)bornyl(meth)acrylat, Bicycloheptanyl(meth)acrylat und Cyclohexyl(meth)acrylat. Besonders bevorzugtes Vinylmonomer ist Methylmethacrylat.

Die erfindungsgemäß kontaktoptischen Gegenstände enthalten im allgemeinen bis zu 65 Gew.-% an nicht hydrophilen Vinylmonomeren. Bevorzugt enthalten sie 10 bis 60 Gew.-% und besonders bevorzugt 20 bis 55 Gew.-% der Monomeren im Polymeren.

Die erfindungsgemäß kontaktoptischen Gegenstände können gegebenenfalls als Komponente D) hydrophile Vinylmonomere enthalten. Bevorzugte Vinylmonomere sind beispielsweise N-Vinyllactame und Vinylamide und (Meth)acrylsäure-Derivate.

Als Vinyllactame sei beispielsweise N-Vinylpyrrolidon und als (Meth)acrylsäure-Derivate seien (Meth)-acrylsäure und (Meth)acrylamide aufgeführt.

Besonders bevorzugte hydrophile Vinylmonomere sind N-Vinylpyrrolidon und N-Vinyl-N-Methylacetamid.

Die erfindungsgemäß kontaktoptischen Gegenstände enthalten gegebenenfalls bis zu 20 Gew.-% an hydrophilen Vinylmonomeren. Bevorzugt enthalten sie bis zu 10 Gew.-% und besonders bevorzugt bis zu 5 Gew.-% der Monomeren im Polymeren.

Die erfindungsgemäß kontaktoptischen Gegenstände können gegebenenfalls als Vernetzer-Komponente E) bi- oder polyfunktionelle Vinylmonomere enthalten. Hier seien beispielsweise bi- oder polyfunktionelle Methacrylsäureester wie Ethylenglycoldimethacrylat, Propylenglycoldimethacrylat, Diethylenglycoldimethacrylat, 1,4-Butandioldimethacrylat, 1,6-Hexandioldimethacrylat, Trimethylolpropantrimethacrylat, Allylmethacrylat, Vinylmethacrylat, (Meth)acrylsäureester ethoxylierter oder propoxylierter hydroxylgruppenhaltiger Tricyclo[5.2.1.$0^{2.6}$]decan-Derivate (vgl. DE-A 2.931.925) und Bisphenol-A-Dimethacrylat, sowie bi- oder polyfunktionelle Vinyl- oder Allyl-Vernetzer wie beispielsweise Butandioldivinylether, Divinylethylenharnstoff, Divinylpropylenharnstoff, Divinylbenzol, Triallylcyanurat, Triallylisocyanurat, Diethylenglycol-bis-(allylcarbonat), Diallylitaconat, 3,3'-Ethyliden-bis(N-vinyl-2-pyrrolidon), Diallylmaleat, Diallylfumarat, Dimethallylfumarat, Dimethallylmaleat, Diallyldiglycolat, Diallyloxalat, Diallyladipat, Diallylsuccinat, Diallylazelat, Divinyladipat, Triallyltrimellitat und N,N-Diallymelamin genannt. Außerdem seien bis- oder polyfunktionelle Siloxanyl-Methacrylate wie beispielsweise 1,3-Bis(γ-methacryloxypropyl)-1,1,3,3-tetra(trimethylsiloxy)-disiloxan und 1,3-Bis(γ-methacryloxypropyl)-1,1,3,3-tetramethyldisiloxan aufgeführt.

Besonders bevorzugte Vernetzer sind Dimethacrylate wie Ethylenglycoldimethacrylat und Gemische hieraus.

Die erfindungsgemäß kontaktoptischen Gegenstände enthalten im allgemeinen 0 bis 10 Gew.-% an Vernetzern. Bevorzugt enthalten sie 0.1 bis 5 Gew.-%.

Es wurde ein Verfahren zur Herstellung von kontaktoptischen Gegenständen gefunden, das dadurch gekennzeichnet ist, daß man

A) 5 bis 40 Gew.-Teile eines 2-(N-Alkyl-Perfluoroalkylsulfonamido)-alkyl(meth)acrylats der Formel

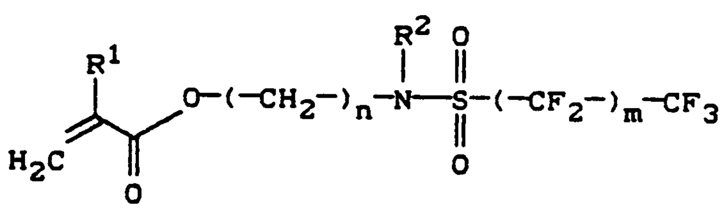

(I),

in der

$R^1$ H, $CH_3$,

$R^2$ H, Niederalkyl, Cycloalkyl, Aryl,
n eine Zahl von 1 bis 6,
m eine Zahl von 0 bis 11
bedeuten,

B) 5 bis 60 Gew.-Teile eines (Meth)acrylsäureesters oder eines Gemisches verschiedener Polyorganosiloxan-(Meth)acrylsäureester,
C) gegebenenfalls bis zu 60 Gew.-Teile eines nicht hydrophilen Vinylmonomeren,
D) gegebenenfalls bis zu 20 Gew.-Teile eines hydrophilen Vinylmonomeren und
E) gegebenenfalls bis zu 10 Gew.-Teile eines nicht unter B) fallenden bi- oder polyfunktionellen Vinylmonomeren

in Gegenwart eines Radikalstarters polymerisiert, wobei die Summe der Gew.-Teile 100 beträgt.

Als Radikalstarter können beispielsweise Peroxide wie Dibenzoylperoxid, Dilauroylperoxid oder Azoverbindungen wie Azoisobutyronitril verwendet werden. Auch Photoinitiatoren wie beispielsweise 2,2-Dimethoxy-2-phenylacetophenon, Diethoxyacetophenon, 1-Hydroxycyclohexyl-Phenylketon oder Benzoin-propyl- oder isobutyl-ether können als Polymerisationsstarter eingesetzt werden.

Eine bevorzugte Ausführungsform des erfindungsgemäßen Verfahrens ist die Polymerisation als Massepolymerisation in Plattenkammern, Glasröhrchen, Kunststoff-Röhrchen oder -Näpfchen. Bevorzugt wird die Ausführungsform in Plattenkammern oder aus Polyolefinen-Röhrchen bzw. -Näpfchen gewählt.

Die so erhaltenen Materialien enthalten praktische keine wasserextrahierbaren Bestandteile. Ihr Wassergehalt nach Hydratisierung beläuft sich je nach Anteil der hydrophilen Monomeren auf 0.5 bis 2 Gew.-% (bezogen auf hydratisierten Zustand).

Die Benetzungs-Randwinkel liegen im Bereich von 68 bis 75°, und die Sauerstoffdurchlässigkeiten belaufen sich auf Werte von 300 bis 1250 $cm^3O_2/(m^2 \cdot 24h \cdot bar)$.

Die Shore-D-Härten von 70 bis 85 gewährleisten eine gute Verarbeitbarkeit und eine mit Polymethylmethacrylat-Materialien vergleichbare Kratzfestigkeit.

Die Oberflächen der aus den erfindungsgemäßen Materialien hergestellten Kontaktlinsen zeigen im Xenontest nach 1000 Stunden Bestrahlung unter dem Elektronenstrahl-Raster-Mikroskop keinerlei Mikrorißbildung.

Aufgrund der hohen Sauerstoffdurchlässigkeit, der guten Benetzbarkeit und der hervorragenden Stabilität eignen sich Kontaktlinsen aus dem erfindungsgemäßen Material besonders als VT-Linsen (Verlängertes-Tragen-Linsen). In biologischen Prüfungen konnte nachgewiesen werden, daß auf dem Kaninchenauge ununterbrochenem Tragen über eine Periode von 30 Tagen keine Reizerscheinungen auftreten und die Linsen beschlagfrei und ohne Ablagerungen blieben.

Ein besonderer Vorteil der erfindungsgemäß kontaktoptischen Gegenstände ist die sehr gute Benetzbarkeit bei gleichzeitig sehr hoher Sauerstoffdurchlässigkeit. Dieser Effekt des 2-(N-Alkyl-Perfluoroalkylsulfonamido)alkyl(meth)acrylats ist um so überraschender, als die Fluormonomere bisher benutzt wurden, um die Oberflächen von Kunststoffen, Leder, Metallen und Textilien öl- und wasserabweisend zu gestalten (US 2.803.615; US 3.100.180).

<u>Beispiel 1 bis 18:</u>

Die radikalischen Polymerisationen wurden in Polypropylen-Röhrchen (Ø 12 mm) durchgeführt.

Monomermischungen der Komponenten
A) 2-(N-Alkyl-Perfluoroalkylsulfonamido)alkyl(meth)acrylat,
B) Siloxan-(Meth)acrylat,
C) nicht-hydrophiles Vinylmonomer,
D) hydrophiles Vinylmonomer und
E) bi- oder polyfunktionelles Vinylmonomer

mit den in Tabelle 1 aufgeführten Zusammensetzungen wurden entgast und unter Luftausschluß in die Polymerisations-Gefäße überführt.

Die Polymerisationen wurden photochemisch gestartet und bei 40°C 24 h mit UV-Fluoreszenz-Licht bestrahlt.

Danach wurde weitere drei Tage mit UV-Licht bestrahlt, entformt und anschließend ein Tag im Trockenschrank bei 80°C getempert. Aus den zylindrischen Formen wurden Rohlingen und aus diesen durch Drehen und Polieren Kontaktlinsen gefertigt.

<u>Messung der Shore-Härten:</u>

Von den Materialien wurden im trockenen Zustand die Shore D-Werte (nach DIN 53 505) bestimmt. Dazu werden ca. 7 mm dicke Rohlinge gedreht und plan geschliffen.

Die Wasser-Benetzungs-Randwinkel wurden mit einem Video-System ermittelt. Angegeben sind die Mittelwerte aus 10 dynamischen Randwinkeln, die in einem Zeitbereich von 10 sec bestimmt wurden.

Die Sauerstoffdurchlässigkeiten wurden massenspectroskopisch bestimmt. Mit einer Partialdruckdifferenz von einem bar wurde Sauerstoff über eine Periode von 24 h durch Proben von ca. 1,5 mm Dicke und 12 mm Ø gedrückt. Die Messungen wurden bei 35 °C, einer relativen Luftfeuchte von 100 % und einer zusätzlichen Befeuchtung des Materials mit einem Tropfen $H_2O$ durchgeführt.

Die Transmissibilitäten sind auf eine Probendicke von 1 mm normiert.

Tabelle 1: Zusammensetzung der Monomergemische

| Bsp. | TRIS [%] | TETRA [%] | MEMO [%] | ATRIS [%] | HTRIS [%] | C4FM [%] | C8FM [%] | MMA [%] | VMA [%] | EGDM [%] | TAC [%] |
|---|---|---|---|---|---|---|---|---|---|---|---|
| 1 | 40 | - | - | - | - | 10 | - | 45 | 5 | 1 | 1,5 |
| 2 | 55 | - | - | - | - | 5 | - | 35 | 5 | 1 | 1,5 |
| 3 | - | 30 | - | - | - | 10 | - | 55 | 5 | - | - |
| 4 | 10 | - | - | - | - | 40 | - | 40 | 5 | 1 | 1,5 |
| 5 | 16 | 4 | - | - | - | 20 | - | 50 | 10 | - | 1,5 |
| 6 | 46 | 4 | - | - | - | 20 | - | 20 | 10 | - | 1,5 |
| 7 | 30 | - | - | - | - | 10 | - | 60 | - | 1 | - |
| 8 | 20 | - | 10 | - | - | 10 | - | 60 | - | 1 | - |
| 9 | 20 | - | 10 | - | - | 10 | - | 55 | 5 | 1 | 1,5 |
| 10 | 21 | 4 | 10 | - | - | 10 | - | 50 | 5 | 1 | 1,5 |
| 11 | 20 | - | - | 7 | 3 | 10 | - | 60 | - | 1 | - |
| 12 | 20 | - | - | 7 | 3 | 10 | - | 55 | 5 | 1 | 1,5 |
| 13 | 21 | 4 | - | 7 | 3 | 10 | - | 50 | 5 | 1 | 1,5 |
| 14 | - | - | - | 13 | 7 | 30 | - | 45 | 5 | 1 | 1,5 |
| 15 | 20 | - | - | 7 | 3 | 30 | - | 35 | 5 | 1 | 1,5 |
| 16 | 30 | - | - | - | - | - | 20 | 45 | 5 | 1 | 1,5 |
| 17 | 35 | - | - | - | - | - | 10 | 45 | 10 | 1 | 1,5 |
| 18 | 20 | - | - | 7 | 3 | - | 20 | 50 | - | 1 | 1,5 |

| | |
|---|---|
| TRIS: | γ-Methacryloxypropyl-tris-(trimethylsiloxy)silan |
| TETRA: | 1,3-Bis(α-methacryloxypropyl-1,1,3,3-tetra(trimethylsiloxy)disiloxan) |
| MEMO: | γ-Methacryloxypropyltrimethoxysilan |
| ATRIS: | γ-Methacryloxypropyl-tris-(3-acetoxypropyldimethylsiloxy)silan |
| HTRIS: | γ-Methacryloxypropyl-tris-(3-hydroxypropyldimethylsiloxy)silan |
| C4FM: | 2-(N-Methyl-Perfluorobutylsulfonamido)-ethylmethacrylat |
| C8FM: | 2-(N-Methyl-Perfluorooctylsulfonamido)-ethylmethacrylat |
| MMA: | Methylmethacrylat |
| VMA: | N-Vinyl-N-Methylacetamid |
| EGDM: | Ethylenglycoldimethacrylat |
| TAC: | Triallylisocyanurat |

Tabelle 2

| Physikalische Eigenschaften der Materialien | | | | |
|---|---|---|---|---|
| Bsp. | Shore-D | $H_2O$ [%] | ø [°] | $O_2$-Durchlässigkeit [$cm^3 O_2/m^2 \cdot 24h \cdot bar$)] |
| 1 | 80 | 1.5 | 75 | 1059 |
| 2 | 80 | 1.4 | 86 | 705 |
| 3 | 81 | 1.5 | 74 | 813 |
| 4 | 84 | 1.0 | 70 | 280 |
| 5 | 82 | 2.0 | 76 | 318 |
| 6 | 75 | 2.7 | 76 | 800 |
| 7 | 83 | 0.7 | 73 | 650 |
| 8 | 82 | 1.2 | 74 | 740 |
| 9 | 83 | 1.8 | 74 | 760 |
| 10 | 83 | 2.1 | 75 | 800 |
| 11 | 83 | 1.0 | 74 | 630 |
| 12 | 82 | 1.3 | 74 | 640 |
| 13 | 82 | 1.6 | 75 | 750 |
| 14 | 78 | 1.5 | 80 | 310 |
| 15 | 80 | 1.4 | 79 | 510 |
| 16 | 76 | 1.1 | 70 | 630 |
| 17 | 79 | 1.9 | 75 | 760 |
| 18 | 79 | 1.1 | 70 | 515 |

**Patentansprüche**

**1.** Kontaktoptische Gegenstände aus benetzbaren, gegebenenfalls vernetzen, Copolymerisaten aus olefinisch ungesättigten Monomeren, dadurch gekennzeichnet, daß sie als Comonomeren die Komponenten

A) 5 bis 40 Gew.-% eines (N-Alkyl-Perfluoroalkylsulfonamido)-alkyl(meth)acrylats der Formel

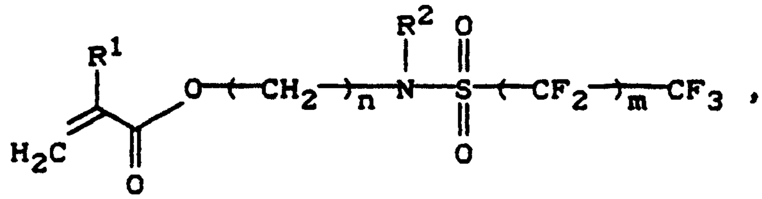

in der

$R^1$ H, $CH_3$,

$R^2$ H, Alkyl mit 1 bis 6 Kohlenstoffatomen, Cycloalkyl mit 5 bis 9 Kohlenstoffatomen, Aryl mit 6 bis 12 Kohlenstoffatomen,

n eine Zahl von 1 bis 6,

m eine Zahl von 0 bis 11

bedeuten,

B) 5 bis 60 Gew.-% eines Siloxanyl-(Meth)acrylsäureesters oder eines Gemisches aus verschiedenen Siloxanyl-(Meth)acrylsäureestern,

C) gegebenenfalls bis zu 65 Gew.-% eines nicht hydrophilen Vinylmonomeren,

D) gegebenenfalls bis zu 20 Gew.-% eines hydrophilen Vinylmonomeren und

E) gegebenenfalls bis 10 Gew.-% eines nicht unter B) fallenden bis- oder polyfunktionellen Vinylmonomeren

im Polymeren enthalten, wobei die Summe der Gewichtsprozente A) bis E) 100 beträgt.

2. Kontaktoptische Gegenstände nach Anspruch 1, dadurch gekennzeichnet, daß sie 10 bis 40 Gew.-% (N-Alkyl-Perfluoroalkylsulfonamido)alkyl(meth)acrylat im Polymeren enthalten.

3. Kontaktoptische Gegenstände nach Anspruch 1 und 2, dadurch gekennzeichnet, daß sie 10 bis 55 Gew.-% eines Siloxanyl-(Meth)acrylats oder eines Gemisches verschiedener Siloxanyl-(Meth)acrylate im Polymeren enthalten.

4. Kontaktoptische Gegenstände nach Anspruch 1 bis 3, dadurch gekennzeichnet, daß sie 20 bis 55 Gew.-% eines nicht hydrophilen Vinylmonomeren im Polymeren enthalten.

5. Kontaktoptische Gegenstände nach Anspruch 1 bis 4, dadurch gekennzeichnet, daß sie gegebenenfalls bis zu 10 Gew.-% eines hydrophilen Vinylmonomeren im Polymeren enthalten.

6. Kontaktoptische Gegenstände nach Anspruch 1 bis 5, dadurch gekennzeichnet, daß sie gegebenenfalls 0,1 bis 5 Gew.-% eines nicht unter B) fallenden bi- oder polyfunktionellen Vinylmonomeren im Polymeren enthalten.

7. Verfahren zur Herstellung von kontaktoptischen Gegenständen, dadurch gekennzeichnet, daß man

A) 5 bis 40 Gew.-Teile eines N-(Alkyl-perfluoroalkylsulfonamido)-alkyl(meth)acrylats der Formel

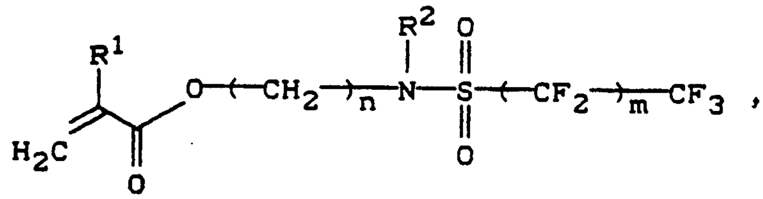

in der

$R^1$ H, $CH_3$,

$R^2$ H, Alkyl mit 1 bis 6 Kohlenstoffatomen, Cycloalkyl mit 5 bis 9 Kohlenstoffatomen, Aryl mit 6 bis 12 Kohlenstoffatomen,
n eine Zahl von 1 bis 6,
m eine Zahl von 0 bis 11

bedeuten,

B) 5 bis 60 Gew.-Teile eines Siloxanyl-(Meth)-acrylsäureesters oder eines Gemisches verschiedener Siloxanyl-(Meth)acrylsäureester,

C) gegebenenfalls bis zu 65 Gew.-Teile eines nicht hydrophilen Vinylmonomeren,

D) gegebenenfalls bis zu 20 Gew.-Teile eines hydrophilen Vinylmonomeren und

E) gegebenenfalls bis zu 10 Gew.-Teile eines nicht unter B) fallenden bi- oder polyfunktionellen Vinylmonomeren

in Gegenwart eines Radikalstarters polymerisiert, wobei die Summe der Gew.-Teile 100 beträgt.

**8.** Verwendung von benetzbaren, gegebenenfalls vernetzten, Copolymerisaten aus olefinisch ungesättigten Monomeren, enthaltend

A) 5 bis 40 Gew.-% eines Perfluoroalkylsulfonamidoalkyl(meth)acrylats der Formel

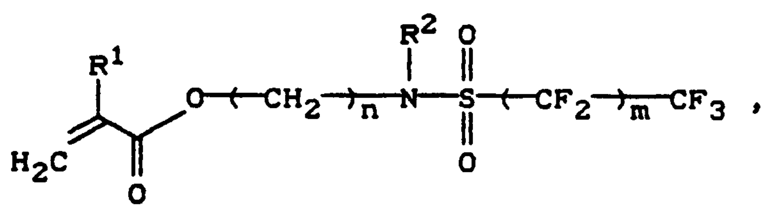

in der

$R^1$ H, $CH_3$,
$R^2$ H, Alkyl mit 1 bis 6 Kohlenstoffatomen, Cycloalkyl mit 5 bis 9 Kohlenstoffatomen, Aryl mit 6 bis 12 Kohlenstoffatomen,
n eine Zahl von 1 bis 6,
m eine Zahl von 0 bis 11

bedeuten,

B) 5 bis 60 Gew.-% eines Polyorganosiloxan-(Meth)acrylsäureesters oder eines Gemisches aus verschiedenen Polyorganosiloxan-(Meth)-acrylsäureestern,

C) gegebenenfalls bis zu 65 Gew.-% eines nicht hydrophilen Vinylmonomeren,

D) gegebenenfalls bis zu 20 Gew.-% eines hydrophilen Vinylmonomeren und

E) gegebenenfalls bis 10 Gew.-% eines nicht unter B) fallenden bi- oder polyfunktionellen Vinylmonomeren

wobei die Summe der Gewichtsprozente A) bis E) 100 beträgt,

für kontaktoptische Gegenstände.

**9.** Verwendung nach Anspruch 8 für Kontaktlinsen oder Skleralschalen.

## Claims

**1.** Contact-optical objects comprising wettable, optionally crosslinked copolymers, composed of olefinically unsaturated monomers, characterized in that said objects contain in the polymer, as comonomers, the components:

A) 5 to 40 %, by weight, of a (N-alkyl-perfluoroalkylsulfonamido)-alkyl(meth)acrylate of the formula

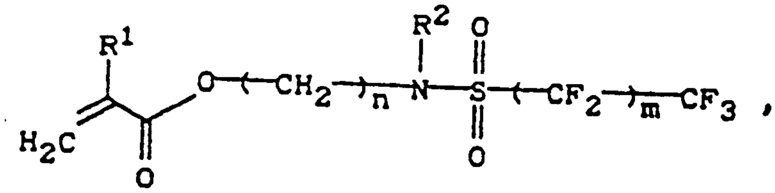

wherein

- $R^1$ denotes H, $CH_3$,
- $R^2$ denotes H, alkyl having 1 to 6 carbon atoms, cycloalkyl having 5 to 9 carbon atoms, aryl having 6 to 12 carbon atoms,
- n denotes a number from 1 to 6,
- m denotes an number from 0 to 11,

B) 5 to 60 %, by weight, of a siloxanyl-(meth)acrylic acid ester or of a mixture of different siloxanyl-(meth)acrylic acid esters,

C) optionally, up to 65 %, by weight, of a non-hydrophilic vinylic monomer,

D) optionally, up to 20 %, by weight, of a hydrophilic vinylic monomer, and

E) optionally, up to 10 %, by weight, of a bis- or polyfunctional vinylic monomer not covered by B),

with the total of percents, by weight, of A) to E) being 100.

**2.** The contact-optical objects of claim 1, characterized in that said objects contain 10 to 40 %, by weight, of (N-alkylperfluoroalkylsulfonamido)-alkyl(meth)acrylate in said polymer.

**3.** The contact-optical objects of claims 1 and 2, characterized in that said objects contain 10 to 55 %, by weight, of a siloxanyl-(meth)acrylate or of a mixture of different siloxanyl-(meth)acrylates in said polymer.

**4.** The contact-optical objects of claims 1 to 3, characterized in that said objects contain 20 to 55 %, by weight, of a non-hydrophilic vinylic monomer in said polymer.

**5.** The contact-optical objects of claims 1 to 4, characterized in that said objects optionally contain up to 10 %, by weight, of a hydrophilic vinylic monomer in said polymer.

**6.** The contact-optical objects of claims 1 to 5, characterized in that said objects optionally contain 0.1 to 5 %, by weight, of a bi- or polyfunctional vinylic monomer not being covered by B) in said polymer.

**7.** A process for the preparation of contact-optical objects, characterized in that

A) 5 to 40 parts by weight of a (N-alkyl-perfluoroalkylsulfonamido)-alkyl(meth)acrylate of the formula

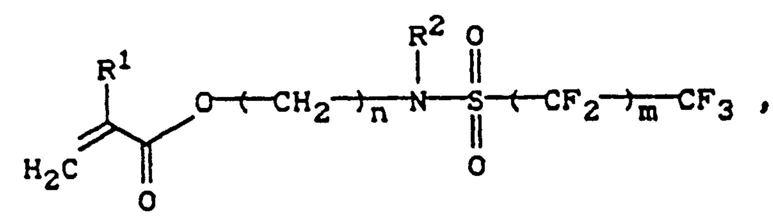

wherein

- $R^1$ denotes H, $CH_3$
- $R^2$ denotes H, alkyl having 1 to 6 carbon atoms, cycloalkyl having 5 to 9 carbon atoms, aryl having 6 to 12 carbon atoms,
- n denotes a number from 1 to 6,
- m denotes a number from 0 to 11,

B) 5 to 60 parts by weight of a siloxanyl-(meth)acrylic acid ester or of a mixture of different siloxanyl-(meth)acrylic acid esters,

C) optionally, up to 65 parts by weight of a non-hydrophilic vinylic monomer,

D) optionally, up to 20 parts by weight of a hydrophilic vinylic monomer, and

E) optionally, up to 10 parts by weight of a bi- or polyfunctional vinylic monomer not being covered by B)

are polymerized in the presence of a radical initiator, with the total of the parts by weight being 100.

**8.** Use of wettable, optionally crosslinked copolymers composed of olefinically unsaturated monomers, said copolymers containing

A) 5 to 40 %, by weight, of a perfluoroalkylsulfonamidoalkyl(meth)acrylate of the formula

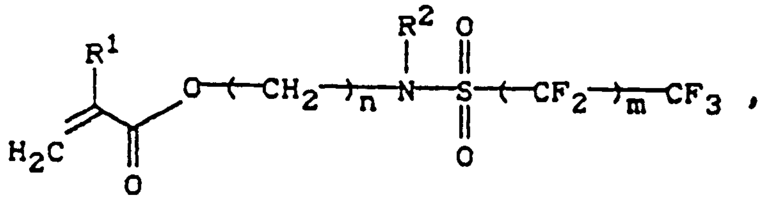

wherein

$R^1$ denotes H, $CH_3$

$R^2$ denotes H, alkyl having 1 to 6 carbon atoms, cycloalkyl having 5 to 9 carbon atoms, aryl having 6 to 12 carbon atoms,

n denotes a number from 1 to 6;

m denotes a number from 0 to 11,

B) 5 to 60 %, by weight, of a polyorganosiloxane-(meth)acrylic acid ester or of a mixture of different polyorganosiloxane-(meth)-acrylic acid esters,

C) optionally, up to 65 %, by weight, of a non-hydrophilic vinylic monomer,

D) optionally, up to 20 %, by weight, of a hydrophilic vinylic monomer, and

E) optionally up to 10 %, by weight, of a bi- or polyfunctional vinylic monomer not being covered by B),

with the total of the percents by weight of A) to E) being 100, for contact-optical objects.

**9.** The use of claim 8 for contact lenses or scleral lenses.

## Revendications

**1.** Corps optiques de contact composés de copolymères mouillables, le cas échéant réticulés, de monomères à insaturation de type oléfinique, caractérisé en ce qu'ils contiennent comme comonomères dans le polymère les composants

A) 5 à 40 % en poids d'un (N-alkyle-perfluoroalkylsulfonamido)-alkyl(méth)acrylate de la formule

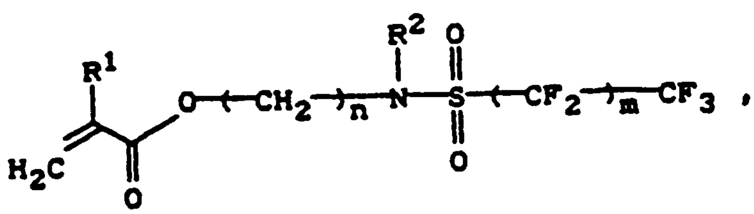

dans laquelle

$R^1$ représente H, $CH_3$,

$R^2$ représente H, de l'alkyle avec 1 à 6 atomes de carbone, du cycloalkyle avec 5 à 9 atomes de carbone, de l'aryle avec 6 à 12 atomes de carbone,

n représente un nombre de 1 à 6

m représente un nombre de 0 à 11,

B) 5 à 60 % en poids d'un ester d'acide siloxanyl-(méth)acrylique ou d'un mélange de différents esters d'acide siloxanyl-(méth)acrylique,

C) le cas échéant jusqu'à 65 % en poids d'un monomère de vinyle non hydrophile,

D) le cas échéant jusqu'à 20 % en poids d'un monomère de vinyle hydrophile et

E) le cas échéant jusqu'à 10 % d'un monomère de vinyle bifonctionnel ou polyfonctionnel ne tombant pas sous B),

la somme des pourcentages en poids A) à E) étant de 100.

**2.** Corps optiques de contact selon la revendication 1, caractérisés en ce qu'ils contiennent dans le polymère 10 à 40 % en poids de (N-alkyle-perfluoroalkylsulfonamido)alkyl(méth)acrylate.

**3.** Corps optiques de contact selon les revendications 1 et 2, caractérisés en ce qu'ils contiennent dans le polymère 10 à 55 % en poids d'un siloxanyl-(méth)acrylate ou d'un mélange de différents siloxanyl-(méth)acrylates.

**4.** Corps optiques de contact selon les revendications 1 à 3, caractérisés en ce qu'ils contiennent dans le polymère 20 à 55 % en poids d'un monomère de vinyle non hydrophile.

**5.** Corps optiques de contact selon les revendications 1 à 4, caractérisés en ce qu'ils contiennent dans le polymère le cas échéant jusqu'à 10 % en poids d'un monomère de vinyle hydrophile.

**6.** Corps optiques de contact selon les revendications 1 à 5, caractérisés en ce qu'ils contiennent dans le polymère le cas échéant 0,1 à 5 % en poids d'un monomère de vinyle bifonctionnel ou polyfonctionnel ne tombant pas sous B).

**7.** Procédé de fabrication de corps optiques de contact caractérisé en ce qu'on polymérise en présence d'un starter de radical

A) 5 à 40 % en poids d'un (N-alkyle-perfluoroalkylsulfonamido)-alkyl(méth)acrylate de la formule

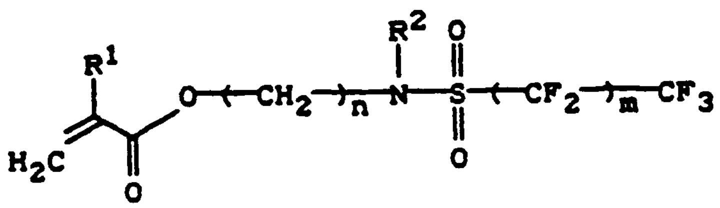 ,

dans laquelle

- $R^1$ représente H, $CH_3$
- $R^2$ représente H, de l'alkyle avec 1 à 6 atomes de carbone, du cycloalkyle avec 5 à 9 atomes de carbone, de l'aryle avec 6 à 12 atomes de carbone,
- n représente un nombre de 1 à 6
- m représente un nombre de 0 à 11,

B) 5 à 60 % en poids d'un ester d'acide siloxanyl-(méth)acrylique ou d'un mélange de différents esters d'acide siloxanyl-(méth)acrylique,

C) le cas échéant jusqu'à 65 % en poids d'un monomère de vinyle non hydrophile,

D) le cas échéant jusqu'à 20 % en poids d'un monomère de vinyle hydrophile et

E) le cas échéant jusqu'à 10 % d'un monomère de vinyle bifonctionnel ou polyfonctionnel ne tombant pas sous B),

la somme des parts en poids étant de 100.

**8.** Utilisation, pour des objets optiques de contact, de copolymères mouillables, le cas échéant réticulés, de monomères à insaturation de type oléfinique, contenant

A) 5 à 40 % en poids d'un perfluoroalkylsulfonamidoalkyl(méth)acrylate de la formule

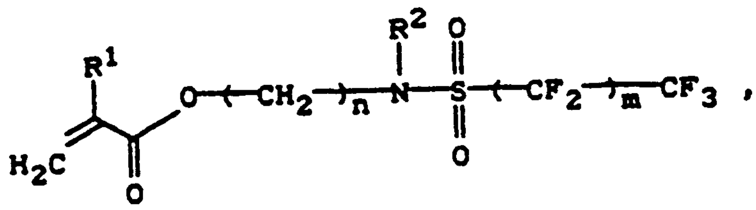

dans laquelle

$R^1$ représente H, $CH_3$

$R^2$ représente H, de l'alkyle avec 1 à 6 atomes de carbone, du cycloalkyle avec 5 à 9 atomes de carbone, de l'aryle avec 6 à 12 atomes de carbone,

n représente un nombre de 1 à 6

m représente un nombre de 0 à 11,

B) 5 à 60 % en poids d'un ester d'acide polyorganosiloxane-(méth)acrylique ou d'un mélange de différents esters d'acide polyorganosiloxane-(méth)acrylique,

C) le cas échéant jusqu'à 65 % en poids d'un monomère de vinyle non hydrophile,

D) le cas échéant jusqu'à 20 % en poids d'un monomère de vinyle hydrophile et

E) le cas échéant jusqu'à 10 % d'un monomère de vinyle bifonctionnel ou polyfonctionnel ne tombant pas sous B),

la somme des pourcentages en poids A) à E) étant de 100.

**9.** Utilisation selon la revendication 8 pour verres de contact ou lentilles sclérales.